# EUROPEAN PATENT SPECIFICATION

(11) **EP 1 418 117 B1**
(45) Date of publication and mention of the grant of the patent: **04.08.2010**
(21) Application number: 03025484.1
(22) Date of filing: 06.11.2003
(51) Int. Cl.: B62H 5/00, B62K 19/46, B62J 1/12

(54) **Locking device and vehicle comprising a locking device**
Schliessvorrichtung und Fahrzeug mit einer solchen Schliessvorrichtung
Dispositif de verrouillage et véhicule avec un tel dispositif

(30) Priority: 08.11.2002 JP 2002326069
(43) Date of publication of application: 12.05.2004
(73) Proprietor: Yamaha Hatsudoki Kabushiki Kaisha, Iwata-shi, Shizuoka-ken (JP)
(72) Inventor: Yamamoto, Yoshiaki, Yamaha Hatsudoki Kabushiki Kaisha, Iwata-shi Shizuoka-ken (JP)
(74) Representative: Grünecker, Kinkeldey, Stockmair & Schwanhäusser Anwaltssozietät

(56) References cited:
- JP-A- 5 008 773
- JP-A- 10 203 443
- JP-A- 55 148 669
- JP-A- 60 067 279
- US-A1- 5 020 625

## Description

The invention relates to a locking device, in particular for a cover of a saddle type vehicle, comprising a pair of left and right pivot shafts, a pair of left and right locking plates mounted for rotation with said pivot shafts, a pair of left and right strikers for engagement and disengagement with said locking plates, respectively, and a locking member for releasably locking said engagements. Further, the invention relates to a saddle type vehicle comprising a container case supported on a body and a cover for openably closing an opening of said container case.

Such a locking device, as it may be applied to a cover in a saddle type vehicle, wherein the cover is provided for openably closing an opening of a container case supported on a body, and this cover is locked in the body, as well as a saddle type vehicle comprising such a locking device, is known, for example, from JPC 3100682.

Therein, a container case is supported on a body having a cover for openably closing the opening of this container case, and comprising: a pair of left and right pivot shafts supported on the body by support brackets, a pair of left and right locking plates mounted for rotation to the body by these pivot shafts, a pair of left and right strikers supported on the cover and engaged with the locking plates for disengagement, respectively, a pair of left and right springs for biasing these locking plates so as to release the engaging states of the locking plates with the strikers, and a pair of left and right locking members for releasably locking the engagements, respectively.

In this case, if the opening of the container case is closed by the cover from the condition of opening, strikers supported on the cover are automatically engaged separately with the locking plates against the biasing force of the springs, and these engagements are automatically locked separately by the locking members.

On the other hand, when the opening of the container case is opened, locking by the locking members is released through key operation and the engagements of the strikers with the locking plates are released by the biasing force of the springs. Then, the cover can be removed from the opening of the container case. In this way, small items can be put into and taken out from the container case through the opening opened.

In this known locking device, sets of parts of pivot shafts, springs and locking members are each provided in the form of a pair of left and right pieces. Therefore, a large number of parts are necessary so that the construction of the locking device is complicated.

Moreover, when the opening of the container case is closed by the cover, the strikers are engaged separately by the locking plates and these two engagements are locked separately by the locking members. However, the operator is not able to recognize visually whether or not each of the two engagements is locked, so that it is to be confirmed tactually or aurally.

Therefore, even if only one of the two engagements is locked, there is a possibility of erroneous recognition that the two engagements are each locked. In such a case where only one of the two engagements is being locked, in joint portions of the opening edge of the opening of the container case and the cover, a gap is likely to be produced in the vicinity of the locking plate and the striker of which the engagement is not locked, and there is a possibility of ingress of rain water into the container case through this gap.

In addition, since the springs act so as to release the engagements by the biasing force, the biasing force might unfavorably cause the gap to be widened.

A saddle type vehicle according to the preamble of claim 1 is shown by JP 60-67279 A.

It is, therefore, an object of the invention to provide a saddle type vehicle comprising a more reliable locking, device also having a simplified structure.

This object is solved in an inventive manner by a saddle type vehicle as defined in claim 1.

By providing a locking device wherein said left and right pivot shafts are formed integral with each other, the number of parts is decreased compared with the prior art in which pivot shafts are provided separately, and the construction of the locking device is simplified accordingly.

In addition, since said locking member is provided only to one locking plate of said left and right locking plates, the number of parts is decreased compared with the prior art in which locking members are provided to the left and right locking plates, respectively, and the construction of the locking device is simplified in this respect.

When in the case of the saddle type vehicle the opening of the container case is closed by the cover from the condition in which the opening is being opened, locking of the engagements of the strikers with the locking plates is achieved by a locking member provided only to one locking plate. Therefore, occurrence of erroneous recognition is prevented that only one of the two engagements is locked while the other to be locked remains unlocked as in the prior art.

Therefore, if the container case and the cover are arranged such that no gap is produced in joint portions of the opening of the container case and the cover through locking of the engagements by only the locking member, the gap in the joint portions of the opening of the container case and the cover is prevented from being produced, and ingress of rain water into the container case is also prevented provided that only completion of locking of the engagements by the locking member alone is recognized.

According to a preferred embodiment, a spring is provided for biasing said one locking plate to release said engagements.

In this case, because of a locking member being provided to one locking plate as described above, when the locking member has locked the engagement of the striker to said one locking plate, action of the spring, if any, of separating the cover from the opening of the container case through said one locking plate and the striker in the engaging state, is prevented by the locking member.

Therefore, a useless gap due to the biasing force of the spring is prevented from being produced in the joint portions of the opening of the container case and the cover.

According to a further embodiment, the locking device comprises a key-operated type main switch being connected to said locking member.

Preferably, a sensor is provided for detecting said engagements, and this sensor is provided to the other locking plate of said left and right locking plates.

Therefore, since the locking member and the sensor are disposed separate from each other in the lateral direction, these locking member and sensor are prevented from interfering with each other. Thus, assembling work of each of the locking member and the sensor to the body is facilitated, that is, assembling work of the locking device to the vehicle is facilitated.

By providing such a locking device and a vehicle comprising such a locking device, it is possible to simplify the construction of a locking device, in particular for a cover in a saddle type vehicle and to prevent a gap from being produced in joint portions of the opening edge of the opening of a container case and the cover.

In addition, it is possible to facilitate assembling work of the locking device to a body.

The saddle type vehicle comprises a container case supported on a body, a cover for openably closing an opening of said container case, a pair of left and right pivot shafts supported on said body by support brackets. A pair of left and right locking plates are mounted for rotation to the body by said pivot shafts. Further preferably, a pair of left and right strikers are supported on said cover.

They may be engaged for disengagement with said locking plates, respectively.

In such a saddle type vehicle, it is possible that laterally on one side of the body a key-operated type main switch is disposed, to this main switch is connected said locking member in association therewith, and this locking member is disposed laterally on the same side as said one side of the body.

Moreover, said support brackets, pivot shafts and locking plates are preferably connected together as an assembly, and this assembly is attached to the body in one unit.

Further preferred embodiments are subject to the subclaims.

In the following, the invention will be described in greater detail by means of an embodiment with reference to the accompanying drawings, wherein:
- Fig. 1: is a sectional view as seen along the arrows of the line 1-1 of Fig. 3;
- Fig. 2: is a side view of the rear of a vehicle;
- Fig. 3: is a plan view as seen along the arrows of the line 3-3 of Fig. 2;
- Fig. 4: is a sectional view as seen along the arrows of the line 4-4 of Fig. 3;
- Fig. 5: is a sectional view as seen along the arrows of the line 5-5 of Fig. 3;
- Fig. 6: is a sectional view as seen along the arrows of the line 6―6 of Fig. 3;
- Fig. 7: is an enlarged sectional view of the section "7" of Fig. 4; and
- Fig. 8: is a view of another embodiment corresponding to Fig. 7.

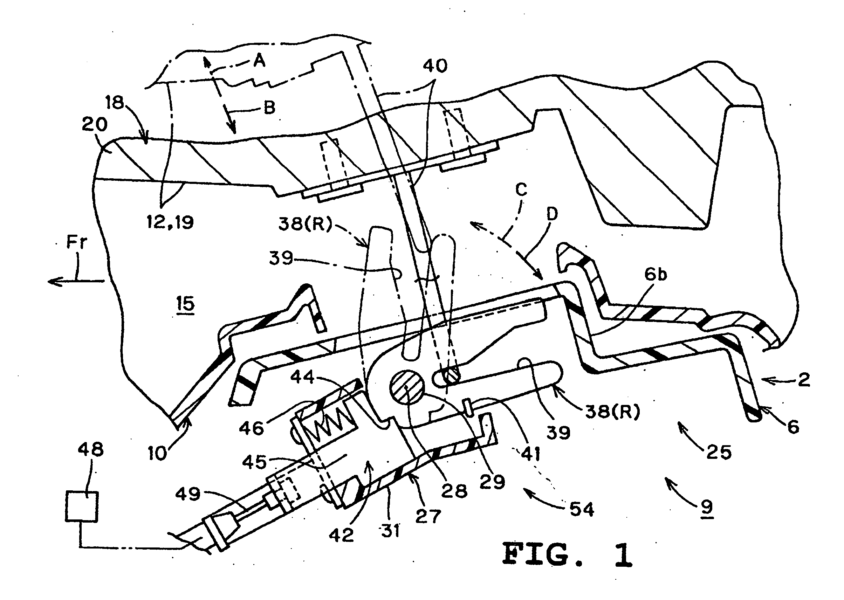

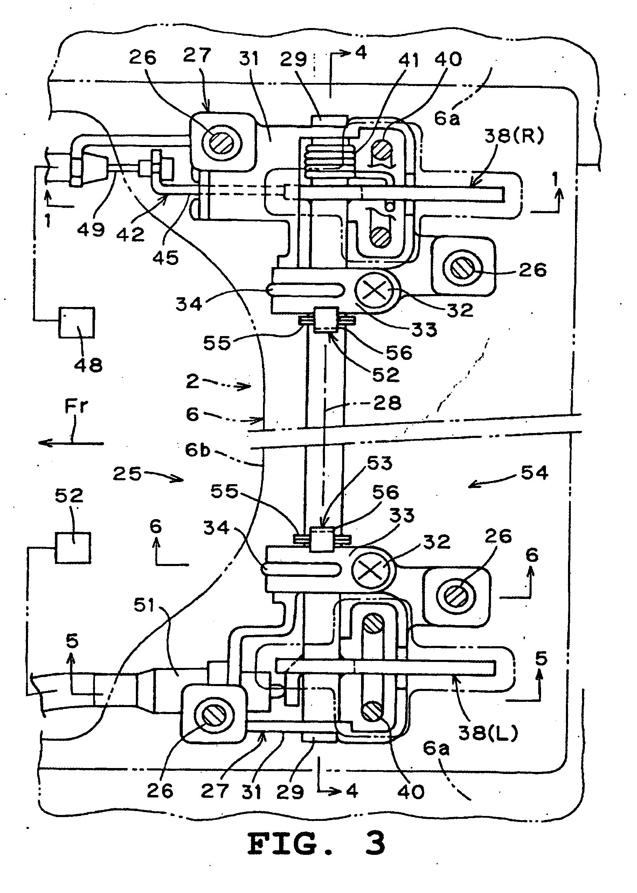

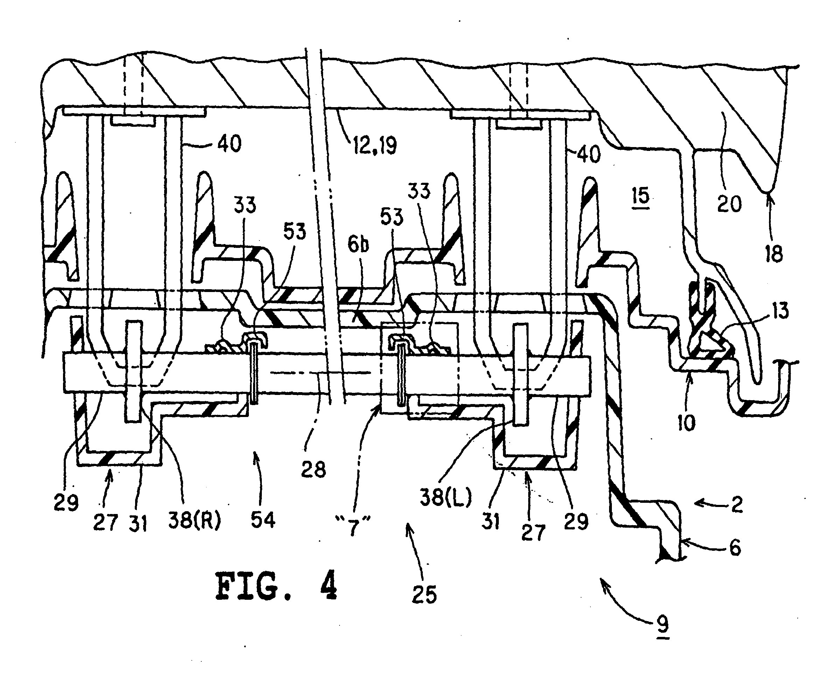

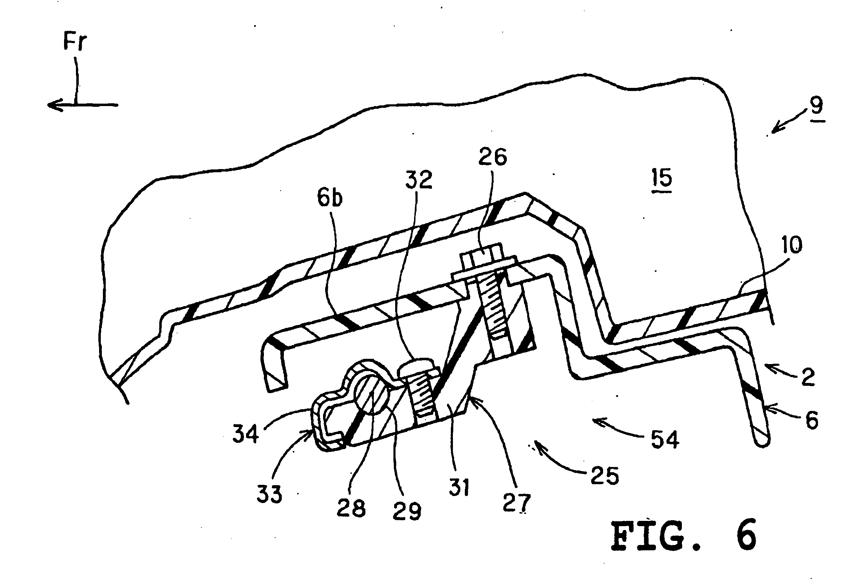

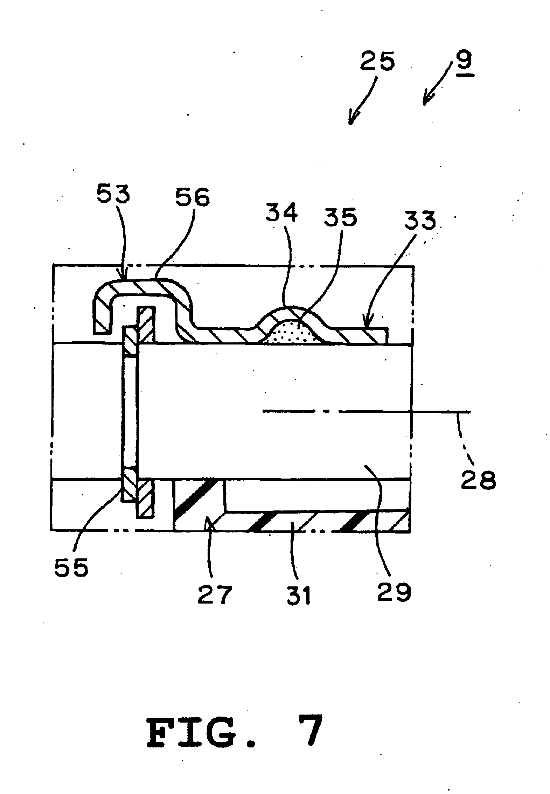

In Figs. 1-7, reference numeral 1 designates a saddle type vehicle of a scooter type and an arrow Fr shows the front of this vehicle 1. Terms of left and right in the following description mean lateral directions of a body 2 of the vehicle 1 as seen toward the front.

The vehicle 1 comprises the body 2, an unillustrated front wheel supported for steering movement at the front of the body 2, and a rear wheel 3 supported at the rear of the body 2 by an unillustrated drive unit. The body 2 is supported by these wheels 3 on the running surface 4. The body 2 comprises a body frame 6 constituting its frame, side panels 7 supported on the body frame 6. The body frame 6 comprises a pair of longitudinally extending left and right main frames 6a, 6a, and a cross member 6b extending in the lateral direction of the body 2 for connecting the main frames 6a, 6a to each other.

The vehicle 1 comprises a container device 9 for holding small items 8 such as a helmet. The container device 9, which is supported on the body frame 6 of the body 2, comprises an upwardly opening plastic container case 10, a plastic cover 12 for openably closing the opening 11 of the container case 10 at its upper end from above, an elastic sealing member 13 supported on the cover 12 and held between the opening edge of the opening 11 of the container case 10 and the cover 12 for sealing their joint portions, and a hinge 14 for pivotally mounting the forward end of the cover 12 to the forward end of the container case 10 on the body 2 such that the rear of the cover 12 makes forward and backward rotational movements A, B upwardly toward the front. A closed space surrounded by the container case 10 and the cover12 constitutes a container space 15 for the small items 8.

The vehicle 1 comprises a riders seat 18 supported on the body 2 and taking a posture for sitting-on. The seat 18 comprises a seat frame 19 constituted by the cover 12, and a seat pad 20 supported on the seat frame 19. The front of the seat 18 is used as a main seat 21 for a driver, and the rear of the seat 18 as a tandem seat 22 for a tandem rider.

The vehicle 1 comprises a locking device 25 capable of locking the cover 12 which has closed the opening 11. of the container case 10 while the cover is taking the closing posture, and capable of locking the seat 18 while the seat is taking a posture for sitting-on. The locking device 25 comprises a pair of left and right support brackets 27, 27 disposed downwardly of the longitudinal middle (approximately a central portion) of the container case 10 and supported on the underside of the cross member 6b of the body frame 6 through fastening of fastening members 26, and a pair of left and right pivot shafts 29, 29 disposed on a common axial center 28 extending in the lateral direction of the body 2 and supported on the support brackets 27, 27 for rotation about the axial center 28.

Each support bracket 27 comprises a plastic bracket body 31 supported on the cross member 6b of the body frame 6 with the fastening members 26 for supporting the lower side of the pivot shaft 29 from below, and a sheet metal shaft pusher 33 fastened to the bracket body 31 with a fastening member 32 for pushing the upper side of the pivot shaft 29 from above. The shaft pusher 33 is formed with a bead 34 bulging radially outwardly of the pivot shaft 29 and extending around the periphery of the pivot shaft 29. The inside of the bead 34 is filled with grease for lubricating the sliding portion of the pivot shaft 29 with the support bracket 27, or lubricating oil 35.

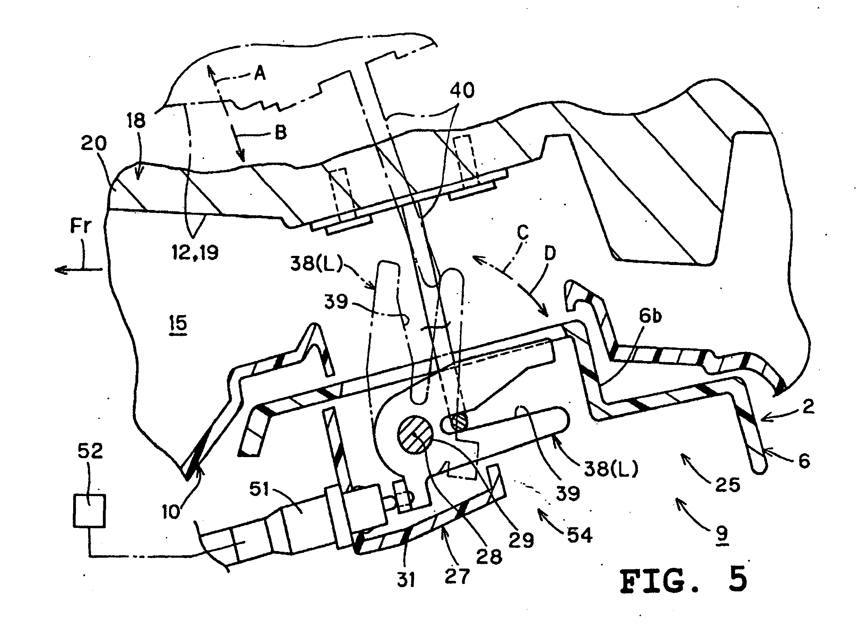

The locking device 25 comprises a pair of left and right locking plates 38, 38 fixed to the pivot shafts 29 by welding and protruding rearward from the pivot shafts 29, respectively. Each locking plate 38 has an engagement cutout 39 extending from the protruding end toward the base thereof. The locking plates 38, 38 make forward and backward rotational movement C, D around the axial center 28 together with the pivot shafts 29 upwardly toward the front. The locking device 25 comprises a pair of left and right strikers 40, 40 supported on the cover 12, protruding downward from the cover 12 and engaged for disengagement with their respective engagement cutouts 39 of the locking plates 38 moved in a returning rotational direction of D, as shown in Figs. 1 and 3-5 by solid lines; a spring 41 for elastically biasing the locking plate 38 such that the locking plate 38 is moved in the forward rotational direction of C to release the engagement, as shown in Figs. 1 and 5 by single dot and dash lines; and a locking member 42 for releasably locking the engagement against the spring force of the spring 41.

The left and right pivot shafts 29, 29 are formed integral with each other into a single shaft. The locking member 42 is provided to only one of the left and right locking plates 38, 38, or the right locking plate 38(R). The spring 41 is provided to directly bias the right locking plate.38(R) only.

The locking member 42 comprises a locking member body 45 supported in the right support bracket 27 for a back-and-forth sliding movement in a forward and/or returning direction with an engagement portion 44 formed in the right locking plate 38(R) and engaged with the engagement portion 44 for disengagement through the sliding movement, for locking the locking plate 38 while the locking plate is taking a posture of returning rotational movement D, as shown in Figs. 1 and 3-5 by solid lines; and a spring 46 for elastically biasing the locking member body 45 such that the locking member body 45 is engaged with the engagement portion 44.

Laterally on one side of the body 2, or the right side, and in front of the locking member 42 is disposed a key-operated type main switch 48 which is supported on the body 2. To the main switch 48 is connected, in association therewith, the locking member body 45 of the locking member 42 by a cable 49 which extends in the longitudinal direction approximately in a straight line in plan view of the body 2.

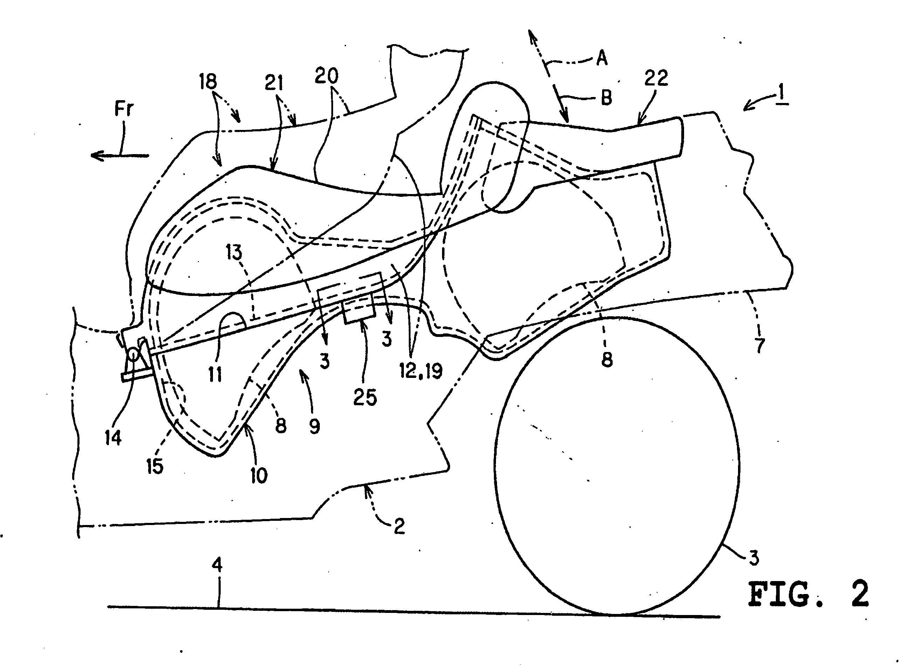

In the locking device 25 described above, if key operation of the main switch 48 is performed against the biasing force of the spring 46, the locking member body 45 of the locking member 42 is moved in association with the main switch 48 and engagement of the locking member body 45 with the engagement portion 44 of the locking plate 38(R) is released. In other words, locking of the engagement of the striker 40 with the locking plate 38(R) is released. Then, as shown in Figs. 1 and 5 by single dot and dash lines, the locking plate 38 is biased by the spring 41 such that it makes a forward rotational movement C. That is, the locking plate is biased by the spring 41 such that engagement of the striker 40 with the locking plate 38 is released. This allows the forward rotational movement A of the cover 12 (seat 18). If the cover 12 (seat 18) is rotated in a forward rotational direction of A further than the double dot and dash line shown in Fig. 2, the opening 11 of the container case 10 is opened, allowing small items 8 to be put into or taken out from the container case 10.

When the cover 12 (seat 18) is rotated in the returning rotational direction of B from the state of the forward rotational movement A, as described above, and begins to close the opening 11 of the container case 10, the right striker 40 begins to engage with the engagement cutout 39 of the right locking plate 38(R), as shown in Fig. 1 by a single dot and dash line. If the cover 12 (seat 18) is rotated further in the returning rotational direction of B, the striker 40 is engaged with the locking plate 38, as shown in Figs. 1 and 3-5 by solid lines, and the biasing force of the spring 46 causes the locking member body 45 to be engaged with the engagement portion 44 of the locking plate 38(R), so that the engagement is locked as it is and the locking device 25 returns to the original state.

There are provided a sensor 51 supported on the support bracket 27 for detecting the engagement, and a lamp 52 connected to the sensor 51 for illuminating the container space 15. The lamp 52 is turned off through detection of the engagement by the sensor 51 and it is turned on through detection of the engagement being released. Putting-in and taking-out of the small items 8 to and from the container case 10 is thereby facilitated. In this case, the sensor 51 is provided to the other of the two locking plates 38, 38, or the left locking plate 38(L).

In Figs. 1 and 3-7, the support brackets 27, 27, pivot shafts 29, 29, left and right locking plates 38, 38, locking member 42 and sensor 51 are connected together by connecting members 53 and the like into an assembly 54. The assembly 54 can be removably attached to the cross member 6b of the body frame 6 of the body 2 with the fastening members 26. The connecting member 53 comprises a snap ring 55 removably fitted on the pivot shaft 29 near the side of the shaft pusher 33, and a connecting piece 56 protruding from the shaft pusher 33 integral therewith and extending to a region near the side of the snap ring 55 opposite the shaft pusher 33.

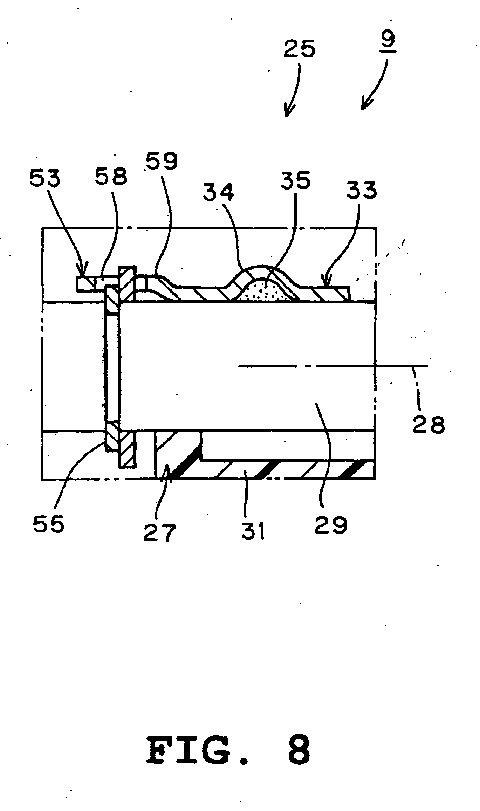

Fig. 8 shows another embodiment of the connecting member 53. In Fig. 8, the connecting member 53 comprises a connecting piece 59 protruded from the shaft pusher 33 integral therewith and having a fitting hole 58 for the snap ring 55 partially to be fitted in. Otherwise, the construction is the same as the foregoing connecting member 53, so that like parts in the figure are designated by like reference numerals and the description is omitted.

In the foregoing arrangement, the left and right pivot shafts 29, 29 are formed integral with each other.

Therefore, the number of parts is decreased compared with the prior art in which pivot shafts are provided separately, and the construction of the locking device 25 is simplified accordingly.

The locking member 42 is provided to only one locking plate 38(R) of the left and right locking plates 38, 38.

Therefore, the number of parts is decreased compared with the prior art in which locking members 42 are provided to the left and right locking plates 38, respectively, and the construction of the locking device 25 is simplified in this respect.

Also, when the opening 11 of the container case 10 is closed by the cover 12 from the condition in which the opening 11 is being opened, locking of the engagements of the strikers 40 with the locking plates 38 is achieved by a locking member 42 provided only to one locking plate 38(R). Therefore, occurrence of erroneous recognition is prevented that only one of the two engagements is locked while the other to be locked remains unlocked as in the prior art.

Therefore, if the container case 10 and the cover 12 are arranged such that no gap is produced in joint portions of the opening 11 of the container case 10 and the cover 12 through locking of the engagements by only the locking member 42, the gap in the joint portions of the opening 11 of the container case 10 and the cover 12 is prevented from being produced provided that only completion of locking of the engagements by the locking member 42 alone is recognized.

Also, as described above, a spring 41 is provided for biasing said one locking plate 38(R) to release the engagements.

In this case, because of a locking member 42 being provided to one locking plate 38(R) as described above, when the locking member 42 has locked the engagement of the striker 40 to said one locking plate 38(R), action of the spring 41, if any, of separating the cover 12 from the opening 11 of the container case 10 through said one locking plate 38(R) and the striker 40 in the engaging state, is prevented by the locking member 42.

Therefore, a useless gap due to the biasing force of the spring 41 is prevented from being produced in the joint portions of the opening 11 of the container case 10 and the cover 12.

Also, as described above, a key-operated type main switch 48 is disposed laterally on one side of the body 2, to the main switch 48 is connected in association therewith the locking member 42, and the locking member 42 is disposed laterally on the same side as said one side of the body 2.

Therefore, since the locking member 42 and the main switch 48 are disposed on the same side of the body 2, these locking member 42 and main switch 48 come closer to each other, so that the construction of connecting means such as a cable 49 for connecting these locking member 42 and main switch 48 to each other in associated relation, is simplified. In other words, the construction of the locking device 25 is simplified.

Also, as described above, a sensor 51 for detecting engagements is provided, and the sensor 51 is provided to the other locking plate 38(L) of the left and right locking plates 38,38.

Therefore, since the locking member 42 and the sensor 51 are disposed separate from each other in the lateral direction, these locking member 42 and sensor 51 are prevented from interfering with each other. Thus, assembling work of each of the locking member 42 and the sensor 51 to the body 2 is facilitated, as well as connecting work of the cable 49 to the locking member 42 and wiring work to the sensor 51, that is, assembling work of the locking device 25 to the body 2 is facilitated.

Also, as described above, the support brackets 27, pivot shafts 29, locking plates 38, locking member 42 and sensor 51 are connected together as an assembly 54 and the assembly 54 can be attached to the body 2 in one unit.

Therefore, if the support brackets 27, pivot shaft 29, locking plates 38, locking member 42 and sensor 51 are assembled together into an assembly 54 in advance in a wide working space and the assembly 54 is assembled to the body 2 after verification of the function, such as rotational movement, of the pivot shaft 29 in the assembly 54, the assembling work can be facilitated to a great extent compared with when the support brackets 27, pivot shafts 29, locking plates 38, and the like are assembled separately to the body 2.

Also, in the foregoing arrangement, the support brackets 27, pivot shafts 29, locking plates 38, locking member 42 and sensor 51 are covered from above approximately entirely by a cross member 6b of the body frame 6 of the body 2, and the container case 10 is disposed upwardly of the cross member 6b.

Therefore, the support brackets 27, 27 and the like are protected by the cross member 6b, and assembling work of the support brackets 27, 27 and the like to the body 2 can be performed easily without interference with the container case 10.

Unlike the embodiment above exemplified by the accompanying drawings, one of the two locking plates 38, 38 may be the locking plate on the left side. Also, the sensor 51 may be one for theft prevention.

Effects of this invention are as follows.

As described above, a locking device preferably for a cover in a saddle type vehicle comprising a container case supported on a body, a cover for openably closing an opening of said container case, a pair of left and right pivot shafts supported on said body by support brackets, a pair of left and right locking plates mounted for rotation to the body by said pivot shafts, a pair of left and right strikers supported on said cover and engaged for disengagement with said locking plates, respectively, and a locking member for releasably locking said engagements, wherein said left and right pivot shafts are formed integral with each other.

Therefore, the number of parts is decreased compared with the prior art in which pivot shafts are provided separately, and the construction of the locking device is simplified accordingly.

In addition, said locking member is provided only to one locking plate of said left and right locking plates.

Therefore, the number of parts is decreased compared with the prior art in which locking members are provided to the left and right locking plates, respectively, and the construction of the locking device is simplified in this respect.

When the opening of the container case is closed by the cover from the condition in which the opening is being opened, locking of the engagements of the strikers with the locking plates is achieved by a locking member provided only to one locking plate. Therefore, occurrence of erroneous recognition is prevented that only one of the two engagements is locked while the other to be locked remains unlocked as in the prior art.

Therefore, if the container case and the cover are arranged such that no gap is produced in joint portions of the opening of the container case and the cover through locking of the engagements by only the locking member, the gap in the joint portions of the opening of the container case and the cover is prevented from being produced, and ingress of rain water into the container case is also prevented provided that only completion of locking of the engagements by the locking member alone is recognized.

According to a preferred embodiment, the locking device for a cover in a saddle type vehicle is provided with a spring for biasing said one locking plate to release said engagements.

In this case, because of a locking member being provided to one locking plate as described above, when the locking member has locked the engagement of the striker to said one locking plate, action of the spring, if any, of separating the cover from the opening of the container case through said one locking plate and the striker in the engaging state, is prevented by the locking member.

Therefore, a useless gap due to the biasing force of the spring is prevented from being produced in the joint portions of the opening of the container case and the cover.

A further embodiment is directed to a locking device for a cover in a saddle type vehicle, wherein laterally on one side of the body is disposed a key-operated type main switch, to this main switch is connected said locking member in association therewith, and this locking member is disposed laterally on the same side as said one side of the body.

Therefore, since the locking member and the main switch are disposed on the same side of the body, these locking member and main switch come closer to each other, so that the construction of connecting means such as a cable for connecting these locking member and main switch to each other in associated relation, is simplified. In other words, the construction of the locking device is simplified.

Preferably, a sensor is provided for detecting said engagements, and this sensor is provided to the other locking plate of said left and right locking plates.

Therefore, since the locking member and the sensor are disposed separate from each other in the lateral direction, these locking member and sensor are prevented from interfering with each other. Thus, assembling work of each of the locking member and the sensor to the body is facilitated, that is, assembling work of the locking device to the body is facilitated.

Further preferably, in the locking device for a cover in a saddle type vehicle, said support brackets, pivot shafts and locking plates are connected together as an assembly, and this assembly is attached to the body in one unit.

Therefore, if the support brackets, pivot shafts and locking plates are assembled together into an assembly in advance in a wide working space and the assembly is assembled to the body after verification of the function, such as rotational movement, of the pivot shaft in the assembly, the assembling work can be facilitated to a great extent compared with when the support brackets, pivot shafts and locking plates are assembled separately to the body.

As explained above, in order to simplify the construction of a locking device for a cover in a saddle type vehicle and to prevent more reliably a gap from being produced in joint portions of the opening edge of the opening of a container case and the cover, it is proposed that a container case 10 supported on a body 2 of the saddle type vehicle, a cover 12 for openably closing an opening 11 of the container case 10, and that a pair of left and right pivot shafts 29, 29 supported on the body 2 by support brackets 27, a pair of left and right locking plates 38, 38 mounted for rotation to the body 2 by these pivot shafts 29, 29, a pair of left and right strikers 40, 40 supported on the cover 12 and engaged for disengagement with the locking plates 38, 38, respectively, and a locking member 42 for releasably locking the engagements are provided. The left and right pivot shafts 29, 29 are formed integral with each other. The locking member 42 is provided only to one locking plate 38(R) of the left and right locking plates 38, 38.

## Claims

1. Saddle type vehicle comprising:
a container case (10);
a cover (12) for openably closing an opening (11) of the container case (10); and
a locking device (25) capable of locking the cover (12) in a closed state, the locking device (25) comprising:
a pair of left and right pivot shafts (29, 29) formed integrally with each other,
a pair of left and right locking plates (38, 38) mounted for rotation with said pivot shafts (29, 29),
a pair of left and right strikers (40, 40) for engagement and disengagement with said locking plates (38, 38), respectively, and
a locking member (42) for releasably locking said engagements,
**characterized in that**
the left and right pivot shafts (29, 29) are disposed downwardly of the container case (10).

2. Saddle type vehicle according to claim 1, **characterized in that** said locking member (42) is provided only at one (38(R)) of said left and right locking plates (38,38).

3. Saddle type vehicle according to claim 2, **characterized in that** a spring (41) is provided for biasing said one locking plate (38(R)) to release said engagements.

4. Saddle type vehicle according to at least one of the claims 1 to 3, **characterized by** further comprising a key-operated type main switch (48) being connected to said one locking member (42).

5. Saddle type vehicle according to at least one of the claims 1 to 4, **characterized in that** a sensor (51) is provided for detecting said engagements.

6. Saddle type vehicle according to claim 5, when dependent on claim 2, **characterized in that** said sensor (51) is provided to the other locking plate (38(L)) of said left and right locking plates (38,38).

7. Saddle type vehicle according to at least one of the claims 1 to 6 **characterized by** said container case (10) being supported on a body (2) of said vehicle.

8. Saddle type vehicle according to claim 7, **characterized in that** said pair of left and right pivot shafts (29,29) are supported on said vehicle body (2) by support brackets (27).

9. Saddle type vehicle according to claim 7 or 8, **characterized in that** said pair of left and right strikers (40,40) are supported on said cover (12).

10. Saddle type vehicle according to at least one of the claims 8 to 9, **characterized in that** said support brackets (27), pivot shafts (29) and locking plates (38) are connected together as an assembly (54), wherein this assembly (54) is attached to the body (2) of the vehicle (1) in one unit.

11. Saddle type vehicle according to at least one of the claims 7 to 10, when dependent on claim 4, **characterized in that** the key-operated type main switch (48) is disposed laterally on one side of the vehicle body (2), this main switch (48) being connected to said locking member (42) in association therewith, and wherein this locking member (42) is disposed laterally on the same side as said one side of the body (2).

## Patentansprüche

1. Fahrzeug vom Aufsitz- Typ, aufweisend:
ein Behälterkasten (10);
einen Deckel (12) zum Verschließen einer Öffnung (11) des Behälterkasten (10), die geöffnet werden kann; und
eine Verriegelungsvorrichtung (25), die in der Lage ist, den Deckel (12) in einem geschlossenen Zustand zu verriegeln, wobei die Verriegelungsvorrichtung (25) aufweist:
ein Paar von linken und rechten Schwenkwellen (29, 29), miteinander einstückig gebildet,
ein Paar von linken und rechten Verriegelungsplatten (38, 38), montiert zur Drehung mit den Schwenkwellen (29, 29),
ein Paar von linken und rechten Eingriffsteilen (40, 40), jeweils zum In- Eingriff- oder Außer- Eingriff- Kommen mit den Verriegelungsplatten (38, 38), und
ein Verriegelungsteil (42) zum lösbaren Verriegeln der Eingriffe,
**dadurch gekennzeichnet, dass**
die linken und rechten Schwenkwellen (29, 29) unterhalb des Behälterkastens (10) angeordnet sind.

2. Fahrzeug vom Aufsitz- Typ nach Anspruch 1, **dadurch gekennzeichnet, dass** das Verriegelungsteil (42) nur an einer (38(R)) der linken oder rechten Verriegelungsplatten (38, 38) vorgesehen ist.

3. Fahrzeug vom Aufsitz- Typ nach Anspruch 2, **dadurch gekennzeichnet, dass** eine Feder zum Vorspannen einer Verriegelungsplatte (38(R)) vorgesehen ist, um die Eingriffe freizugeben.

4. Fahrzeug vom Aufsitz- Typ nach zumindest einem der Ansprüche 1 bis 3, **gekennzeichnet durch** außerdem aufweisend einen Hauptschalter (48) vom schlüsselbetätigten Typ, der mit dem einen Verriegelungsteil (42) verbunden ist.

5. Fahrzeug vom Aufsitz- Typ nach zumindest einem der Ansprüche 1 bis 4, **dadurch gekennzeichnet, dass** ein Sensor (51) vorgesehen ist, um die Eingriffe zu erfassen.

6. Fahrzeug vom Aufsitz- Typ nach Anspruch 5, wenn abhängend von Anspruch 2, **dadurch gekennzeichnet, dass** der Sensor (51) an der anderen Verriegelungsplatte (38(L)) der linken und rechten Verriegelungsplatten (38, 38) vorgesehen ist.

7. Fahrzeug vom Aufsitz- Typ nach zumindest einem der Ansprüche 1 bis 6, **gekennzeichnet dadurch, dass** das der Behälterkasten (10) an einer Karosserie (2) des Fahrzeuges gelagert ist.

8. Fahrzeug vom Aufsitz- Typ nach Anspruch 7, **dadurch gekennzeichnet, dass** das Paar der linken und rechten Schwenkwellen (29, 29) an der Fahrzeugkarosserie (2) durch Lagerungshalterungen (27) gelagert ist.

9. Fahrzeug vom Aufsitz- Typ nach Anspruch 7 oder 8, **dadurch gekennzeichnet, dass** das Paar der linken und rechten Eingriffsteile (40, 40) an dem Deckel (12) gelagert ist.

10. Fahrzeug vom Aufsitz- Typ nach zumindest einem der Ansprüche 8 bis 9, **dadurch gekennzeichnet, dass** die Lagerungshalterungen (27), die Schwenkwellen (29) und die Verriegelungsplatten (38) miteinander als eine Baugruppe (54) verbunden sind, wobei diese Baugruppe (54) als eine Einheit mit der Karosserie (2) des Fahrzeuges (1) verbunden wird.

11. Fahrzeug vom Aufsitz- Typ nach zumindest einem der Ansprüche 7 bis 10, wenn abhängend von Anspruch 4, **dadurch gekennzeichnet, dass** der Hauptschalter (48) vom schlüsselbetätigten Typ seitlich auf einer der Seiten der Fahrzeugkarosserie (2) angeordnet ist, dieser Hauptschalter (48) mit dem Verriegelungsteil (42) gemeinsam verbunden ist, und wobei dieses Verriegelungsteil (42) seitlich auf derselben Seite wie dieser einen Seite der Karosserie (2) angeordnet ist.

## Revendications

1. Véhicule du type à selle, comprenant :
un coffre (10) ;
un couvercle (12) pour fermer une ouverture (11) du coffre (10) de manière à pouvoir l'ouvrir ; et
un dispositif de verrouillage (25) apte à verrouiller le couvercle (12) en position fermée, le dispositif de verrouillage (25) comprenant :
deux axes de pivot gauche et droit (29, 29) formés d'une seule pièce,
deux plaques de verrouillage gauche et droite (38, 38) montées en rotation sur les axes de pivot (29, 29),
deux percuteurs gauche et droit (40, 40) destinés à s'accoupler et à se désaccoupler respectivement avec les plaques de verrouillage (38, 38), et
un organe de verrouillage (42) pour verrouiller de manière amovible ces accouplements,
**caractérisé en ce que** les axes de pivot gauche et droit (29, 29) sont disposés vers le bas du coffre (10).

2. véhicule du type à selle selon la revendication 1, **caractérisé en ce que** l'organe de verrouillage (42) n'est prévu que sur l'une (38(R)) des plaques de verrouillage gauche et droite (38, 38).

3. véhicule du type à selle selon la revendication 2, **caractérisé en ce qu'**un ressort (41) est prévu pour contraindre ladite plaque de verrouillage (38(R)) en vue de supprimer les accouplements.

4. Véhicule du type à selle selon l'une au moins des revendications 1 à 3, **caractérisé en ce qu'**il comprend par ailleurs un interrupteur principal du type à commande à clé (48) qui est relié à l'organe de verrouillage (42).

5. véhicule du type à selle selon l'une au moins des revendications 1 à 4, **caractérisé en ce qu'**un capteur (51) est prévu pour détecter les accouplements.

6. Véhicule du type à selle selon la revendication 5 lorsqu'elle est dépendante de la revendication 2, **caractérisé en ce que** le capteur (51) est prévu sur l'autre plaque de verrouillage (38(L)), parmi les plaques de verrouillage gauche et droite (38, 38).

7. Véhicule du type à selle selon l'une au moins des revendications 1 à 6, **caractérisé en ce que** le coffre (10) est supporté sur un corps (2) du véhicule.

8. Véhicule du type à selle selon la revendication 7, **caractérisé en ce que** les deux axes de pivot gauche et droit (29, 29) sont supportés sur le corps de véhicule (2) par des bras de support (27).

9. véhicule du type à selle selon la revendication 7 ou 8, **caractérisé en ce que** les deux percuteurs gauche et droit (40, 40) sont supportés sur le couvercle (12).

10. Véhicule du type à selle selon l'une au moins des revendications 8 à 9, **caractérisé en ce que** les bras de support (27), les axes de pivot (29) et les plaques de verrouillage (38) sont reliés entre eux pour former un ensemble (54), cet ensemble (54) étant fixé au corps du véhicule (2) sous la forme d'une unité.

11. Véhicule du type à selle selon l'une au moins des revendications 7 à 10 lorsqu'elles sont dépendantes de la revendication 4, **caractérisé en ce que** l'interrupteur principal du type à commande à clé (48) est disposé latéralement sur un côté du corps de véhicule (2), cet interrupteur principal (48) étant relié à l'organe de verrouillage (42) qui lui est associé, et cet organe de verrouillage (42) étant disposé latéralement sur le même côté que ledit côté du corps (2).
